# EUROPEAN PATENT APPLICATION

(11) **EP 4 668 706 A1**
(43) Date of publication of application: **24.12.2025**
(21) Application number: 24756011.3
(22) Date of filing: 01.02.2024
(51) Int. Cl.: H04L 51/046

(54) **SESSION PAGE DISPLAY METHOD AND APPARATUS, ELECTRONIC DEVICE, AND MEDIUM**

(30) Priority: 15.02.2023 CN 202310139984
(71) Applicant: Beijing Zitiao Network Technology Co., Ltd., Beijing 100190 (CN)
(72) Inventor: JIN, Xiaoshu, Beijing 100028 (CN); ZHANG, Wenshu, Beijing 100028 (CN); WANG, Shuo, Beijing 100028 (CN)
(74) Representative: Isarpatent
(86) International application number: PCT/CN2024/075229
(87) International publication number: WO 2024/169637

(57) **Abstract**

The embodiments of the present disclosure provide a session page display method and device, electronic device and medium. The method includes: acquiring a session trigger operation for a session page; displaying the session page in response to the session trigger operation, an identifier of an existing member in the session page is displayed in the session page, and the identifier of the existing member is an object applied in the session page and used for identifying the corresponding existing member; and displaying session information and the identifier of the member to which the session information belongs in the session page.

## Description

### CROSS REFERENCE TO RELATED APPLICATIONS

The present application is based on and claims priority from CN Patent Application No. 202310139984.0 filed on February 15, 2023, the disclosure of which is incorporated by reference herein in its entirety.

### TECHNICAL FIELD

The present disclosure relates to computer technologies, and in particular, to a session page display method and apparatus, an electronic device and a medium.

### BACKGROUND

An application is a computer program that is run in user mode and has a visual page for interacting with a user in order to perform a particular task or tasks. The session page in the application may refer to a page for providing a session chat interaction function.

In the related art, in a session page, chat interaction between users is generally realized by displaying text, images, voice, and the like.

### SUMMARY

In a first aspect, the embodiments of the present disclosure provide a session page display method including:
acquiring a session trigger operation for a session page;
displaying the session page in response to the session trigger operation, an identifier of an existing member in the session page is displayed in the session page, and the identifier of the existing member is an object applied in the session page for identifying the corresponding existing member; and
displaying the session information and the identifier of the member to which the session information belongs in the session page.

In a second aspect, the embodiments of the present disclosure provide A session page display apparatus including:
an acquisition module configured to acquire a session trigger operation for a session page;
a first display module configured to display the session page in response to the session trigger operation, an identifier of an existing member in the session page is displayed in the session page, and the identifier of the existing member is an object applied in the session page and used for identifying the corresponding existing member; and
a second display module configured to display the session information and the identifier of the member to which the session information belongs in the session page.

In a third aspect, the embodiments of the present disclosure provide an electronic device, including: one or more processing devices;
a storage device to store one or more programs,
when executed by the one or more processing devices, the one or more programs cause the one or more processing devices to implement the session page display method provided by the embodiments of the present disclosure.

In a fourth aspect, the embodiments of the present disclosure provide a non-transient storage medium containing computer-executable instructions which, when executed by a computer processor implements the session page display method provided by the embodiments of the present disclosure.

In a fifth aspect, the embodiments of the present disclosure provide a computer program, including: instructions which, when executed by a processor, cause the processor to implement the session page display method provided by the embodiments of the present disclosure.

### BRIEF DESCRIPTION OF THE DRAWINGS

The above and other features, advantages, and aspects of embodiments of the present disclosure will become more apparent by referring to the following detailed description when taken in conjunction with the accompanying drawings. Throughout the drawings, the same or similar reference numerals refer to the same or similar elements. It should be understood that the drawings are schematic and that elements and components are not necessarily drawn to scale.
Fig. 1 is a schematic flowchart of a session page display method provided by an embodiment of the present disclosure;
Fig. 2 is a schematic implementation diagram of a session page provided by an embodiment of the present disclosure;
Fig. 3 is a schematic implementation diagram of a message page provided by an embodiment of the present disclosure;
Fig. 4 is a schematic flowchart of another session page display method provided by an embodiment of the present disclosure;
Fig. 5 is a schematic implementation diagram of another session page provided by the embodiment of the present disclosure;
Fig. 6 is a schematic structural diagram of a session page display apparatus provided by an embodiment of the present disclosure;
Fig. 7 is a schematic structural diagram of an electronic device provided by an embodiment of the present disclosure.

### DETAILED DESCRIPTION

Embodiments of the present disclosure will be described in more detail below with reference to the accompanying drawings. Although some embodiments of the present disclosure are shown in the drawings, it should be understood that the present disclosure can be embodied in various forms and should not be construed as limited to the embodiments set forth here, but rather, these embodiments are provided for a more thorough and complete understanding of the present disclosure. It should be understood that the drawings and embodiments of the present disclosure are only used for illustrative purposes, and are not used to limit the protection scope of the present disclosure.

It should be understood that the steps described in the method embodiments of the present disclosure may be performed in a different order and/or in parallel. Furthermore, method embodiments may include additional steps and/or omit performing the illustrated steps. The scope of the present disclosure is not limited in this respect.

As used herein, the term "including" and its variants are open-ended including, that is, "including but not limited to". The term "based on" is "at least partially based on". The term "one embodiment" means "at least one embodiment"; the term "another embodiment" means "at least one other embodiment"; and the term "some embodiments" means "at least some embodiments". Related definitions of other terms will be given in the following description.

It should be noted that the concepts of "first" and "second" mentioned in this disclosure are only used to distinguish different devices, modules or units, and are not used to limit the order or interdependence of the functions performed by these devices, modules or units.

It should be noted that the modifications of "a" and "a plurality" mentioned in this disclosure are schematic rather than limiting, and those skilled in the art should understand that unless the context clearly indicates otherwise, they should be understood as "one or more".

Names of messages or information exchanged among multiple apparatus in the embodiment of the present disclosure are only used for illustrative purposes, and are not used to limit the scope of these messages or information.

It can be understood that before using the technical solutions disclosed in various embodiments of this disclosure, users should be informed of the types, scope of use, use scenarios and so on of the personal information involved in this disclosure in an appropriate way according to relevant laws and regulations and be authorized by users.

For example, in response to receiving the user's active request, prompt information is sent to the user to clearly remind the user that the requested operation will require acquiring and using the user's personal information. Therefore, the user can independently choose whether to provide personal information to software or hardware such as electronic devices, applications, servers or storage media that perform the operation of the technical solution of the present disclosure according to the prompt information.

In some embodiments, in response to receiving the user's active request, the way of sending the prompt information to the user can be, for example, a pop-up window, in which the prompt information can be presented in a literal way. In addition, the pop-up window can also carry a selection control for the user to choose "agree" or "disagree" to provide personal information to the electronic device.

It can be understood that the above process of notifying and acquiring user authorization is only schematic, and does not limit the implementation of this disclosure. Other ways to meet relevant laws and regulations can also be applied to the implementation of this disclosure.

As mentioned above, the manner of displaying the session page is single, which affects the richness of the page, thereby reducing the interaction rate between the user and the session page, and further affecting the utilization rate of the application.

The present disclosure provides a session page display method and apparatus, electronic device and a medium, to improve richness of pages, and therefore improve interaction rate of a user and a session page and utilization rate of an application.

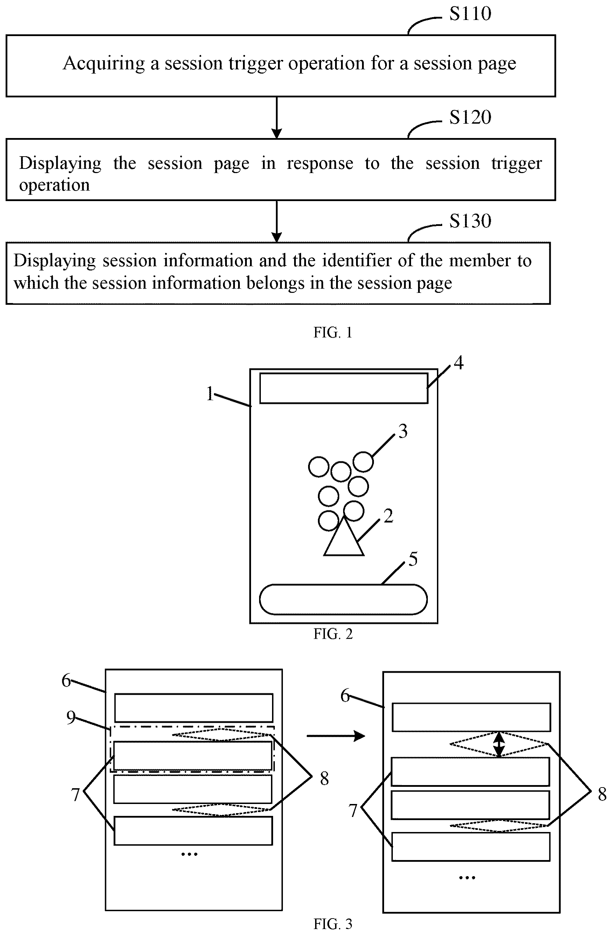

Fig. 1 is a schematic flowchart of a session page display method provided by an embodiment of the present disclosure, where the embodiment of the present disclosure is applicable to a situation where a page is displayed to improve an interaction rate between a user and the session page and a utilization rate of an application. The method may be executed by a session page display apparatus, and the apparatus may be implemented in a form of software and/or hardware, for example, by an electronic device, and the electronic device may be a mobile terminal, a PC terminal, or a server.

As shown in Fig. 1, the method includes:
S110, acquiring a session trigger operation for a session page.

In some embodiments, a session page may be understood to be a page for providing session chat interaction functionality. A session trigger operation may be understood as an operation that triggers the display of the session page.

The session trigger operation is not specifically limited, and for example, the corresponding session trigger operation may be acquired according to the current scene; for example, if it is currently under a common chat page for chatting with other users, the session trigger operation may be an operation triggered by sliding left, sliding right, sliding up, or sliding down, etc. within the current chat page; if it is currently under a message page for displaying various messages of the application, the session trigger operation may be an operation triggered under the message page, and the like. The session page is a page for the user to chat in the application.

The terms "center", "upper", "lower", "left", "right", "front", "rear", and the like indicate an orientation or positional relationship that may be based on the orientation or positional relationship shown in the drawings. For example, "up" and "down" may be set in the header and footer directions of the paper; "left" and "right" may be set with the direction facing the paper surface, and "front" may be the direction perpendicular to the paper surface and from the back of the paper surface to the paper surface; "rear" may be the direction perpendicular to the paper surface and from the paper surface to the back of the paper surface. Such a setting is merely for convenience of describing the technical aspects of the present disclosure, and does not indicate that the contents referred to must have a specific orientation, and thus, cannot be construed as limiting the present disclosure.

S120, displaying the session page in response to the session trigger operation.

In some embodiments, after acquiring the session trigger operation for the session page, the electronic device may respond to the session trigger operation to display the corresponding session page. Also, when the session page is displayed, an identifier of an existing member in the session page may be displayed within the session page. The identifier may also disappear after a set display time (e.g., 2 seconds). The existing members can be understood as chat members existing in the session page. The identifier of the existing member can be understood as an object applied in the session page for identifying the corresponding existing member; the identifier is not particularly limited herein, as can an object in the form of a visual symbol, and the like. The identifier may be an object dedicated to the session page.

In some embodiments, in a session page with a time-limited chat function, in order to express the diversity identity of the member in the session page and protect privacy, a preset visual symbol can be used for designing and extending an identifier, and a corresponding identifier is allocated to each member using the function to identify the member, so that the chat atmosphere is strengthened, and the page richness is improved. Different visual symbols may represent different members.

The embodiment does not specifically limit how the session page is displayed in response to the session trigger operation. For example, in response to the session trigger operation, the existing members currently contained in the session page can be determined, a corresponding identifier is allocated to each existing member from preset identifiers (which can be identifiers specially used for the session page), and the corresponding identifier of each existing member can be different; on the basis, the session page can be displayed, and identifiers corresponding to the existing members can be displayed in the session page, and if the session page includes 20 existing members, the identifiers corresponding to the 20 existing members can be displayed, that is, the number of the existing members in the session page is equal to the number of the displayed identifiers.

In some embodiments, the identifier corresponding to the existing member may be different from the original avatar identifier of the existing member (which may be an avatar identifier set in the application), so as to implement de-identification of the member, thereby implementing protection of the user privacy information.

In some embodiments, existing members within the session page may or may not know the true identity information of members other than themselves. If they know, when the identifiers of the existing members in the session page are displayed in the session page, each identifier can correspondingly carry and display prompt information indicating the real information of the member corresponding to the identifier; or, when the session information of the existing member is displayed in the session page for the first time, the identifier of the existing member may correspondingly carry and display a prompt message indicating the real information of the member corresponding to the identifier. It will be appreciated that the prompt message may disappear within a set time (e.g., 2 seconds). The real information can be understood as information for representing the identity set by the member in the application, for example, the real information can be information such as an avatar identifier and a nickname identifier set by the member in the application.

In some embodiments, the session page can be set to prohibit an operation of keeping the content of the session page, such as screen capture or screen recording, to protect the content in the session page from being leaked out by dissemination.

In some embodiments, while or after the identifier of the existing member in the session page is displayed within the session page, a navigation bar for setting a size and a message box may be displayed in the upper and lower regions of the session page, respectively.

S130, displaying the session information and the identifier of the member to which the session information belongs in the session page.

In some embodiments, session information may be understood as information characterizing a chat session; and the session information is not particularly limited, and may include, but is not limited to, voice information, text information, picture information, video information, and the like.

In some embodiments, after the electronic device displays the session page in response to the session trigger operation, if the session information triggered and sent by the existing member in the session page is acquired, the session information and the identifier of the member to which the session information belongs may be displayed in the session page correspondingly.

In some embodiments, the manner for determining the identifier of the existing member is not limited, and may be selected by the existing member itself, randomly assigned to the existing member, assigned to the existing member based on the requirement of the existing member, or assigned to the existing member based on the actual information of the existing member.

In some embodiments, the identifier of the existing member is a randomly allocated object applied to the session page for identifying the corresponding existing member, and the display duration of the session message in the session page is less than the set duration.

In some embodiments, the identifier of the existing member may be a randomly assigned object applied to the session page for identifying the corresponding existing member.

The display duration may be understood as the duration of the display of the session message. The display duration may also include the duration of background display after exiting the session page. The set time period is understood to be a predetermined time period, which is not limited herein, and may be 1 hour, 2 hours, 3 hours, or the like.

In the electronic device, the display duration of the session messages (for example, including the read and unread session messages) in the session page can be less than the set duration, so as to limit the duration of the display of the session messages and protect the content of the session page.

The session page can be a page for session with a time-limited chat function. The time limit may limit the duration of the session message, or may limit the duration of the session page, for example, the time-limited session page may only be used for chatting within a preset duration.

In some embodiments, the session messages that have been read within the session page may disappear after being displayed for a set length of time, or may disappear after the session page is closed.

In some embodiments, the session message may also disappear after being read.

In some embodiments, session messages (e.g., including read and unread session messages) within a session page may disappear after the session page is closed.

According to the technical solution of the embodiment of the present disclosure, firstly, a session trigger operation for the session page is acquired; then a session page is displayed in response to the session trigger operation, and an identifier of an existing member in the session page is displayed in the session page, and the identifier of the existing member is an object applied in the session page for identifying the corresponding existing member; and finally, the session information and the identifier of the member to which the session information belongs in the session page is displayed. The method can enrich the display mode of the session page through the display of the identifier by displaying the identifier of the existing member in the session page displayed by responding to the session trigger operation and displaying the session information and the identifier of the member to which the session information belongs in the session page, thereby improving the interaction rate of a user with the session page and further improving the utilization rate of an application.

In some embodiments, the identifier of the existing member is displayed at the second set position of the session page after the movement from the first set position of the session page to the second set position of the session page.

In some embodiments, the first set position may be understood as a predetermined first position. The second set position may be understood as a predetermined second position. It will be appreciated that the first and second set positions may be different. The set position is not particularly limited, and may be any position within the session page, such as an edge position (e.g., upper edge, lower edge, left edge, right edge, etc.) or a center position of the session page.

When the session page is displayed in response to the session trigger operation, the identifier of the existing member in the session page displayed in the session page can be moved and displayed from the first set position of the session page to the second set position of the session page. The moving is not specifically limited, for example, a carrier identifier may be displayed at any position in the session page, and the carrier identifier may be understood as an identifier for receiving an existing member identifier, and the expression form of the carrier identifier is not limited herein; the carrier identifier and the identifier of the existing member can be moved together from the position where it is located (the position where it is located may be the first set position) and the second set position to the second set position, respectively; or the carrier identifier is firstly moved to the second set position from the position where it is located, and the existing member identifier is moved to the second set position from the first set position.

The embodiment of the present disclosure provides a session page display method and apparatus, electronic device and medium, firstly, a session trigger operation for the session page is acquired; then a session page is displayed in response to the session trigger operation, and an identifier of an existing member in the session page is displayed in the session page, and the identifier of the existing member is an object applied in the session page for identifying the corresponding existing member; and finally, the session information and the identifier of the member to which the session information belongs in the session page is displayed. The method can enrich the display mode of the session page through the display of the identifier by displaying the identifier of the existing member in the session page displayed by responding to the session trigger operation and displaying the session information and the identifier of the member to which the session information belongs in the session page, thereby improving the interaction rate of a user with the session page and further improving the utilization rate of an application.

Fig. 2 is a schematic implementation diagram of a session page provided by an embodiment of the present disclosure. As shown in Fig. 2, 1 denotes a session page; 2 denotes a carrier identifier; 3 denotes an identifier of an existing member; 4 denotes a navigation bar; and 5 denotes a message box. The first set position can be the upper edge position of the session page 1, the second set position can be the position where the carrier identifier 2 is located, and the carrier identifier 2 and the identifier 3 of the existing member can be moved from the first set position to the second set position in a falling manner; simultaneously with or after moving to the second set position, the navigation bar 4 and the message box 5 may be displayed in a fade-in and fade-out animation at the set positions (e.g., upper position and lower position) of the session page 1. The identifier 3 may be different for each existing member.

In some embodiments, the acquiring a session trigger operation for a session page includes:
displaying a chat page with a target user; and
acquiring the session trigger operation triggered in the chat page, and the session page triggered and displayed by the session trigger operation is a page for carrying out session with the target user.

In some embodiments, the target user may be understood as a user who has chat interactions with the user to which the electronic device belongs. The number of target users may be at least one. The chat page may be understood as a page where chat interactions with a target user are conducted. It is understood that the chat page and the session page are different pages. The chat page and the session page have different authorities, and the authority of the session page is less than that of the chat page. The session page may be considered as a page for chatting that offers greater privacy protection.

The electronic device can display a chat page with the target user and acquire a session trigger operation triggered in the chat page, the session page triggered and displayed by the session trigger operation can be a page for performing a session with the target user. How to acquire the session trigger operation triggered in the chat page is not particularly limited, for example, a session trigger operation may be generated when the user is detected to slide in a certain direction (such as up, down, left or right directions) in the chat page, and the electronic device acquires the generated session trigger operation in real time. The session trigger operation may also be an operation of performing a set gesture on the chat page, such as an operation of handwriting letter "s" on the chat page.

In some embodiments, the acquiring a session trigger operation for a session page includes:
displaying a message page, and a session control corresponding to the session page is displayed in the message page; and
acquiring the session trigger operation triggered in a target hot area of the message page, and an area range of the target hot area is determined based on the display position of the session control in the message page.

In some embodiments, a message page may be understood to be a page for displaying various types of messages for an application. A session control may be understood as a control for triggering the display of a corresponding session page. One or more session controls can be included within the message page, each of the session controls can be different, and one session control can correspond to one session page.

The target hot area can be understood as an operational area within the message page where the session-triggered operation can be detected. One session control may correspond to one target hot area. The region range of the target hot area is determined based on the display position of the session control in the message page; the region range of the target hot area is not particularly limited, and for example, based on the display position of the session control in the message page, a region having a set size, such as a region above and/or below the display position of the session control in the message page, may be determined as the region range of the target hot area corresponding to the session control.

The electronic device can display a message page, a session control corresponding to the session page can be displayed in the message page, and the electronic device can acquire a session trigger operation triggered in the target hot area of the message page.

In some embodiments, a prompt area may be included in the session control, and the prompt area may be used to prompt the user for an unread message in the session page, and the means for prompting is not limited. The prompt area may be an area for indicating content associated with the session page, which may be within the target hot area.

In some embodiments, a prompt area may be included in the session control, and the content displayed in the prompt area may not be associated with the session page, and may be flexibly set according to actual needs, for example, it may be an animation effect for guiding the user.

In some embodiments, the session control in the message page can be set as a control which is opened with an animation effect of opening a drawer, and the entering of the session page can be triggered by means of spreading two fingers apart. In the embodiment, by providing the session control for pushing the session page function in the message page with dense messages, the user is indicated to start the session page with the time-limited chat function by the session control which is a type of message reaching method, so that the interactivity of the session page can be enriched, and the reaching efficiency of the user to the session page can be improved.

In some embodiments, the session control includes a prompt area, content associated with the session page is displayed in the prompt area, and the size of the prompt area changes with the change of the range operated by the session trigger operation.

In some embodiments, the session control may include a prompt area, and the content associated with the session page may be displayed in the prompt area. The content associated with the session page is not particularly limited, and may include an identifier of an existing member in the session page, or an identifier of a member to which the unread session message belongs. The background displayed in the prompt area may be consistent with the background setting of the session page, or may be a preset background.

The size of the prompt area can be changed along with the change of the operation range of the session trigger operation. If the generation of the session trigger operation is triggered in the target hot area by means of spreading two fingers of the user apart, the size of the prompt area at this time can be changed along with the change of the size of the range formed by spreading two fingers apart, namely, the larger the range formed by spreading two fingers apart, the larger the size of the prompt area is. The range operated by the session trigger operation can be understood as a range formed by actions operated by the session trigger operation. The determination of the operation range of the session trigger operation is not limited, and different session trigger operations correspond to different determination means. The operation form of the session trigger operation is not limited here, and may be a spreading-apart type or a slide type. The operation range corresponding to the manner of spreading two fingers apart may be a range formed by spreading two fingers apart. The operation range corresponding to the sliding manner may be a sliding distance, such as a distance moved by a finger on the screen.

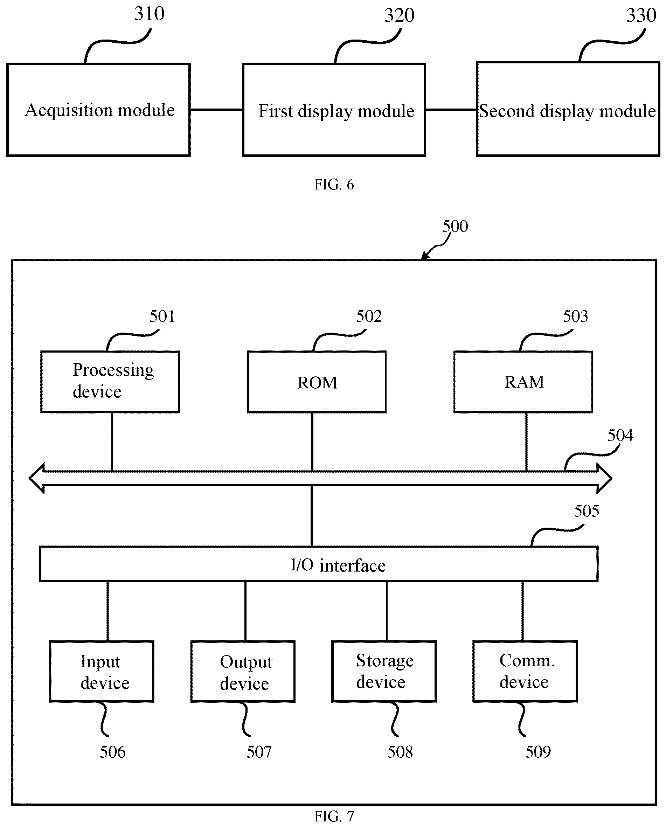

Fig. 3 is a schematic implementation diagram of a message page provided by an embodiment of the present disclosure. As shown in Fig. 3, 6 denotes a message page; 7 denotes a message box within the session control; 8 denotes a prompt area; and 9 denotes a session control. Within the message page 6, the session control 9 may include a message box 7 and a prompt area 8, and the size of the range operated by the session trigger operation is triggered by spreading two fingers apart and gradually increases, and the size of the prompt area 8 increases as the range operated by the session trigger operation increases.

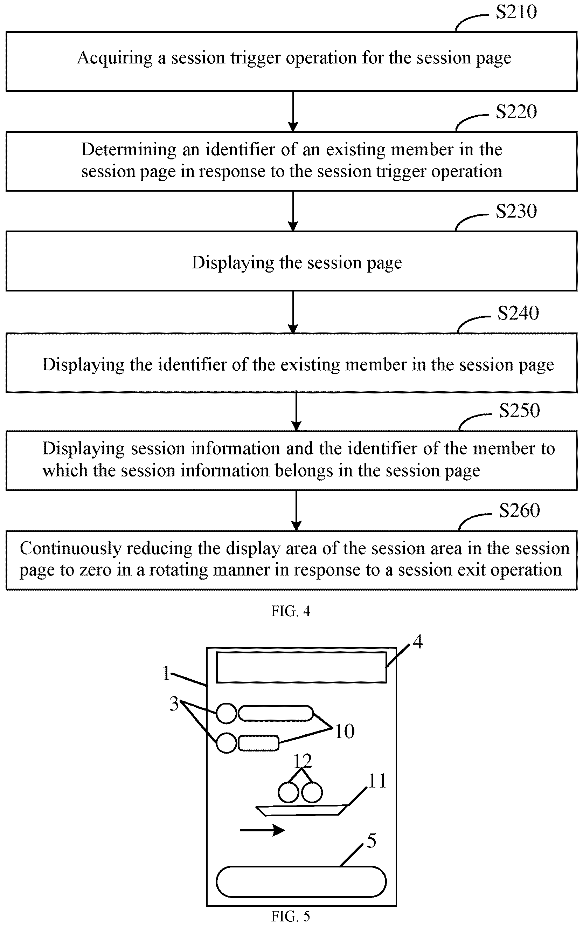

Fig. 4 is a schematic flow diagram of another session page display method provided by the embodiment of the present disclosure. The embodiment performs refinement on the basis of the foregoing embodiments, and exemplarily describes a process of responding to a session trigger operation, displaying a session page, and a process of responding to a session exit operation. It should be noted that, for technical details that are not described in detail in this embodiment, reference may be made to any of the embodiments described above. As shown in Fig. 4, the method includes:

As shown in Fig. 4, a session page display method provided in an embodiment of the present disclosure includes the following steps:
S210, acquiring a session trigger operation for the session page; and
S220, determining an identifier of an existing member in the session page in response to the session trigger operation.

In some embodiments, after acquiring a session trigger operation for a session page, the electronic device can determine an identifier of an existing member within the session page in response to the session trigger operation.

The method for determining the identifiers of the existing members in the session page is not particularly limited, for example, firstly, the existing members and the number of the existing members in the session page may be determined, on the basis, identifiers with the same number as the number of the existing members may be selected from preset identifiers, and the selected identifiers may be randomly allocated to each existing member, where the identifiers allocated to each existing member may be different.

S230, displaying the session page.

In some embodiments, the electronic device may display a session page that does not contain any content after determining the identifier of the existing member within the session page.

S240, displaying the identifier of the existing member in the session page.

In some embodiments, after the electronic device displays a session page that does not contain any content, the identifier of the existing member in the session page can be displayed within the session page; a navigation bar and a message box may be displayed within the session page concurrently with or after the display of the identifier of the existing member.

S250, displaying the session information and the identifier of the member to which the session information belongs in the session page.

S260, continuously reducing the display area of the session area in the session page to zero in a rotating manner in response to a session exit operation.

In some embodiments, a session exit operation may be understood as an operation that triggers the exiting of a session page. The session area may be understood as an area within the session page for displaying session information.

The electronic device may continuously reduce the display area of the session region in the session page to zero in a rotating manner in response to the session exit operation, for example, the display area of the session region in the session page may be continuously reduced to zero in a rotating manner in a set size as the step size. The rotating manner is not limited, and may be a rotating manner in the form of a tornado.

The method for displaying the session page provided by a second embodiment of the present disclosure specifies a process of displaying the session page in response to the session trigger operation and a process of responding to the session exit operation. By utilizing the method, the existing member identifier in the session page is determined first, and then the existing member identifier is displayed in the session page, so that the existing member and the corresponding identifier in the session page can be prompted, and the richness of page display is improved; the richness of page display is further improved by indicating the exit mechanism of the session page through the display animation continuously reducing the session area in a rotating manner.

In some embodiments, the identifier of the changed member is displayed in the form of a set animation within the session interface, the changed member is a member having a changed session state, and the session state indicates whether the member is within the session to which the session interface belongs.

In some embodiments, the set animation may be understood as a preset animation; the method is not particularly limited, and the set animation may be, a movable object, for example, a skate board or an airplane and so on slides into the session page from one side of the session page, where the movable object carries an animation indicating the identifier of the changed member; if there are several changed members, the skate board carries the identifiers of the changed members.

The changed member can be understood as a member having the changed session state; the session state may indicate whether the member is within the session to which the session interface belongs; for example, a changed member may be a member exiting the session page or a member newly joining the session page.

Fig. 5 is a schematic implementation diagram of another session page provided by the embodiment of the present disclosure. As shown in Fig. 5, 10 denotes session information; 11 denotes a skate board; 12 denotes an identifier of a changed member. For example, when the changed member is a new member, the slide board 11 carrying the identifiers 12 of the two changed members horizontally slides into the session page 1 from the left side of the session page 1 along the direction from left to right and slides out from the right side of the session page 1 to reflect the change of the changed member in the session page 1. It is understood that the area where the slide board 11 slides in and out may be an area within the session area where the session information 10 is not covered.

In the embodiment, the manner of adding the newly added member and the manner of allowing the exiting member to exit are set in the session page, so that the novelty and the richness of interaction in the session page can be improved, a user is attracted to interact with the session page to improve the interaction rate, and the utilization rate of an application is improved.

Fig. 6 is a schematic structural diagram of a session page display apparatus provided in an embodiment of the present disclosure, and as shown in Fig. 6, the apparatus includes: an acquisition module 310, a first display module 320, and a second display module 330, in which:
the acquisition module 310 is configured to acquire a session trigger operation for a session page; and
the first display module 320 is configured to display the session page in response to the session trigger operation, an identifier of an existing member in the session page is displayed in the session page, and the identifier of the existing member is an object applied in the session page and used for identifying the corresponding existing member; and
the second display module 330 is configured to display the session information and the identifier of the member to which the session information belongs in the session page.

The solution provided by the embodiment of the present disclosure, firstly, by the acquisition module, acquires a session trigger operation for the session page; then, by the first display module, displays a session page in response to the session trigger operation, and an identifier of an existing member in the session page is displayed in the session page, and the identifier of the existing member is an object applied in the session page for identifying the corresponding existing member; and finally, by the second display module, displays the session information and the identifier of the member to which the session information belongs in the session page. The method can enrich the display mode of the session page through the display of the identifier by displaying the identifier of the existing member in the session page displayed by responding to the session trigger operation and displaying the session information and the identifier of the member to which the session information belongs in the session page, thereby improving the interaction rate of a user with the session page and further improving the utilization rate of an application.

In some embodiments, the identifier of the existing member is displayed in a mobile manner from a first set position of the session page to a second set position of the session page.

In some embodiments, the first display module 320 includes:
identifier determining unit, configured to determine the identifier of the existing member in the session page in response to the session trigger operation;
a first display unit configured to display the session page; and
a first display unit configured to display the identifier of the existing member within the session page.

In some embodiments, the identifier of the existing member is an object that is randomly allocated and applied to the session page to identify the corresponding existing member, and a display duration of the session message in the session page is shorter than a set duration.

In some embodiments, the acquisition module 310 includes:
a third display unit configured to display a chat page with a target user; and
a first acquisition unit configured to acquire the session trigger operation triggered in the chat page, and the session page triggered and displayed by the session trigger operation is a page for carrying out session with the target user.

In some embodiments, the acquisition module 310 includes:
a fourth display unit configured to display a message page, and a session control corresponding to the session page is displayed in the message page; and
a second acquisition unit configured to acquire the session trigger operation triggered in a target hot area of the message page, and an area range of the target hot area is determined based on the display position of the session control in the message page.

In some embodiments, the session control includes a prompt area in which content associated with the session page is displayed, and a size of the prompt area changes as a range in which the session trigger operation is operated changes.

In some embodiments, the apparatus further includes:
a page exiting module configured to continuously reduce the display area of the session area in the session page to zero in a rotating manner in response to a session exit operation.

In some embodiments, the apparatus further includes:
a third display module configured to display an identifier of a changed member in a set animation form in the session interface, the changed member is a member with a changed session state, and the session state indicates whether the member is in the session to which the session interface belongs.

The session page display apparatus provided by the embodiment of the disclosure can perform the session page display method provided by any embodiment of the disclosure, and has corresponding functional modules and advantageous effects obtained by executing the method.

It should be noted that, the units and modules included in the apparatus are merely divided according to functional logic, but are not limited to the above division as long as the corresponding functions can be implemented. In addition, specific names of the functional units are also only used for distinguishing one functional unit from another, and are not used for limiting the protection scope of the embodiments of the present disclosure.

Fig. 7 is a schematic structural diagram of an electronic device according to an embodiment of the present disclosure. Referring now to Fig. 7, a schematic diagram of an electronic device 500 suitable for implementing embodiments of the present disclosure is shown. The electronic device in the embodiments of the present disclosure can include, but is not limited to, a mobile terminal such as a mobile phone, a notebook computer, a digital broadcast receiver, a PDA (personal digital assistant), a PAD (tablet computer), a PMP (portable multimedia player), a vehicle terminal (e.g., a car navigation terminal), and the like, and a fixed terminal such as a digital TV, a desktop computer, and the like. The electronic device shown in Fig. 7 is only an example, and should not bring any limitation to the functions and the scope of use of the embodiments of the present disclosure.

As shown in Fig. 7, the electronic device 500 can include a processing device (e.g., central processing unit, graphics processor, etc.) 501 that can perform various appropriate actions and processes in accordance with a program stored in a read-only memory (ROM) 502 or a program loaded from a storage device 508 into a random access memory (RAM) 503. In the RAM 503, various programs and data necessary for the operation of the electronic device 500 are also stored. The processing device 501, the ROM 502, and the RAM 503 are connected to each other through a bus 504. An input/output (I/O) interface 505 is also connected to bus 504.

Generally, the following devices can be connected to the I/O interface 505: input device 506 including, for example, a touch screen, a touch pad, a keyboard, mouse, a camera, a microphone, accelerometer, gyroscope and the like; an output device 507 including, for example, a Liquid Crystal Display (LCD), a speaker, a vibrator, and the like; storage device 508 including, for example, magnetic tape, hard disk and the like; and a communication device (Comm. device) 509. The communication device 509 can allow the electronic device 500 to communicate with other devices, either wirelessly or by wire, to exchange data. While Fig. 7 illustrates an electronic device 500 having various means, it is to be understood that not all illustrated means are required to be implemented or provided. More or fewer devices can be alternatively implemented or provided.

In particular, the processes described above with reference to the flow diagrams can be implemented as computer software programs, according to embodiments of the present disclosure. For example, embodiments of the present disclosure include a computer program product including a computer program carried on a non-transitory computer readable medium, the computer program containing program code for performing the method illustrated by the flow chart. In such an embodiment, the computer program can be downloaded and installed from a network via the communication device 509, or installed from the storage device 508, or installed from the ROM 502. The computer program, when executed by the processing device 501, performs the above-described functions defined in the methods of the embodiments of the present disclosure.

The names of messages or information exchanged between devices in the embodiments of the present disclosure are for illustrative purposes only, and are not intended to limit the scope of the messages or information.

The electronic device provided by the embodiment of the present disclosure and the session page display method based on the multimedia object provided by the above embodiment belong to the same inventive concept, and technical details that are not described in detail in the embodiment can be referred to the above embodiment, and the embodiment and the above embodiment have the same advantageous effects.

The disclosed embodiments provide a computer storage medium on which a computer program is stored, which when executed by a processor performs the session page display method based on multimedia object provided by the above embodiments.

It should be noted that the computer readable medium of the present disclosure can be a computer readable signal medium or a computer readable storage medium or any combination of the two. A computer readable storage medium can be, for example, but not limited to, an electronic, magnetic, optical, electromagnetic, infrared, or semiconductor system, apparatus, or device, or any combination of the foregoing. More specific examples of the computer readable storage medium can include, but are not limited to: an electrical connection having one or more wires, a portable computer diskette, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing. In the present disclosure, a computer readable storage medium can be any tangible medium that can contain, or store a program for use by or in connection with an instruction execution system, apparatus, or device. In contrast, in the present disclosure, a computer readable signal medium can include a propagated data signal with computer readable program code embodied therein, for example, in baseband or as part of a carrier wave. Such a propagated data signal can take any of a variety of forms, including, but not limited to, electromagnetic, optical, or any suitable combination thereof. A computer readable signal medium can be any computer readable medium that is not a computer readable storage medium and that can communicate, propagate, or transport a program for use by or in connection with an instruction execution system, apparatus, or device. Program code embodied on a computer readable medium can be transmitted using any appropriate medium, including but not limited to: electrical wires, optical cables, radio frequency (RF) and so forth, or any suitable combination of the foregoing.

In some embodiments, the clients and the servers can communicate using any currently known or future developed network Protocol, such as HyperText Transfer Protocol (HTTP), and can be interconnected with any form or medium of digital data communication (e.g., a communication network). Examples of communication networks include a local area network ("LAN"), a wide area network ("WAN"), the Internet, and peer-to-peer networks (e.g., ad hoc peer-to-peer networks), as well as any currently known or future developed network.

The computer readable medium can be embodied in the electronic device or can be separate and not incorporated into the electronic device.

The computer readable medium carries one or more programs which, when executed by the electronic device, cause the electronic device to: acquire a session trigger operation for a session page; display the session page in response to the session trigger operation, an identifier of an existing member in the session page is displayed in the session page, and the identifier of the existing member is an object applied in the session page for identifying the corresponding existing member; and display the session information and the identifier of the member to which the session information belongs in the session page.

Computer program code for carrying out operations for aspects of the present disclosure can be written in any combination of one or more programming languages, including but not limited to an object oriented programming language such as Java, Smalltalk, C++, including conventional procedural programming languages, such as the "C" programming language or similar programming languages. The program code can execute entirely on the user's computer, partly on the user's computer, as a stand-alone software package, partly on the user's computer and partly on a remote computer or entirely on the remote computer or server. In the latter scenario, the remote computer can be connected to the user's computer through any type of network, including a Local Area Network (LAN) or a Wide Area Network (WAN), or the connection can be made to an external computer (for example, through the Internet using an Internet service provider).

The flowchart and block diagrams in the figures illustrate the architecture, functionality, and operation of possible implementations of systems, methods and computer program products according to various embodiments of the present disclosure. In this regard, each block in the flowchart or block diagrams can represent a module, a segment of program, or a portion of code, which includes one or more executable instructions for implementing the specified logical function. It should also be noted that, in some alternative implementations, the functions noted in the block can occur out of the order noted in the figures. For example, two blocks shown in succession can, in fact, be executed substantially concurrently, or the blocks can sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

The units described in the embodiments of the present disclosure can be implemented by software or hardware. The name of a unit does not in some cases constitute a limitation of the unit itself. For example, the first display unit can also be described as "the unit for displaying the session page".

The functions described herein above can be performed, at least in part, by one or more hardware logic components. For example, without limitation, exemplary types of hardware logic components that can be used include: field Programmable Gate Arrays (FPGA), Application Specific Integrated Circuits (ASIC), Application Specific Standard Products (ASSP), system on a chip (SOC), Complex Programmable Logic Devices (CPLD), and the like.

In the context of this disclosure, a machine-readable medium can be a tangible medium that can contain, or store a program for use by or in connection with an instruction execution system, apparatus, or device. The machine-readable medium can be a machine-readable signal medium or a machine-readable storage medium. A machine-readable medium can include, but is not limited to, an electronic, magnetic, optical, electromagnetic, infrared, or semiconductor system, apparatus, or device, or any suitable combination of the foregoing. More specific examples of a machine-readable storage medium would include an electrical connection based on one or more wires, a portable computer diskette, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing.

According to one or more embodiments of the present disclosure, example 1 provides a session page display method including:
acquiring a session trigger operation for a session page;
displaying the session page in response to the session trigger operation, an identifier of an existing member in the session page is displayed in the session page, and the identifier of the existing member is an object applied in the session page for identifying the corresponding existing member; and
displaying the session information and the identifier of the member to which the session information belongs in the session page.

According to one or more embodiments of the present disclosure, example 2 provides the method according to example 1, and the identifier of the existing member is displayed in a mobile manner from a first set position of the session page to a second set position of the session page.

According to one or more embodiments of the present disclosure, example 3 provides the method according to example 1, and the displaying the session page in response to the session trigger operation includes:
determining the identifier of the existing member in the session page in response to the session trigger operation;
displaying the session page; and
displaying the identifier of the existing member within the session page.

According to one or more embodiments of the present disclosure, example 4 provides the method according to example 3, the identifier of the existing member is an object that is randomly allocated and applied to the session page to identify the corresponding existing member, and a display duration of the session message in the session page is shorter than a set duration.

According to one or more embodiments of the present disclosure, example 5 provides the method according to example 1, and the acquiring a session trigger operation for a session page includes:
displaying a chat page with a target user; and
acquiring the session trigger operation triggered in the chat page, and the session page triggered and displayed by the session trigger operation is a page for carrying out session with the target user.

According to one or more embodiments of the present disclosure, example 6 provides the method according to example 1, and the acquiring a session trigger operation for a session page includes:
displaying a message page, and a session control corresponding to the session page is displayed in the message page; and
acquiring the session trigger operation triggered in a target hot area of the message page, and an area range of the target hot area is determined based on the display position of the session control in the message page.

According to one or more embodiments of the present disclosure, example 7 provides the method according to example 6, the session control includes a prompt area in which content associated with the session page is displayed, and a size of the prompt area changes as a range in which the session trigger operation is operated changes.

According to one or more embodiments of the present disclosure, example 8 provides the method according to example 1, further including:
continuously reducing the display area of the session area in the session page to zero in a rotating manner in response to a session exit operation.

According to one or more embodiments of the present disclosure, example 9 provides the method according to example 1, further including:
displaying an identifier of a changed member in a set animation form in the session interface, the changed member is a member with a changed session state, and the session state indicates whether the member is in the session to which the session interface belongs.

According to one or more embodiments of the present disclosure, example 10 provides a session page display apparatus including:
an acquisition module configured to acquire a session trigger operation for a session page;
a first display module configured to display the session page in response to the session trigger operation, an identifier of an existing member in the session page is displayed in the session page, and the identifier of the existing member is an object applied in the session page and used for identifying the corresponding existing member; and
a second display module configured to display the session information and the identifier of the member to which the session information belongs in the session page.

According to one or more embodiments of the present disclosure, example 11 provides an electronic device, including:
one or more processing devices;
a storage device to store one or more programs,
when executed by the one or more processing devices, the one or more programs cause the one or more processing devices to implement the session page display method according to any one of examples 1 to 9.

According to one or more embodiments of the present disclosure, example 12 provides a non-transient storage medium containing computer-executable instructions which, when executed by a computer processor implements the session page display method according to any one of examples 1 to 9.

According to one or more embodiments of the present disclosure, example 13 provides a computer program, including: instructions which, when executed by a processor, cause the processor to implement the session page display method according to any one of examples 1 to 9.

The above description is only the preferred embodiment of the present disclosure and the explanation of the applied technical principles. It should be understood by those skilled in the art that the disclosure scope involved in this disclosure is not limited to the technical scheme formed by the specific combination of the above technical features, but also covers other technical schemes formed by any combination of the above technical features or their equivalent features without departing from the above disclosure concept. For example, the above features are replaced with (but not limited to) technical features with similar functions disclosed in this disclosure.

Furthermore, although the operations are depicted in a particular order, this should not be understood as requiring that these operations be performed in the particular order shown or in a sequential order. Under certain circumstances, multitasking and parallel processing may be beneficial. Likewise, although several specific implementation details are contained in the above discussion, these should not be construed as limiting the scope of the present disclosure. Some features described in the context of separate embodiments can also be combined in a single embodiment. On the contrary, various features described in the context of a single embodiment can also be implemented in multiple embodiments individually or in any suitable sub-combination.
Although the subject matter has been described in language specific to structural features and/or methodological logical acts, it should be understood that the subject matter defined in the appended claims is not necessarily limited to the specific features or acts described above. On the contrary, the specific features and actions described above are only exemplary forms of implementing the claims.

## Claims

1. A session page display method comprising:
acquiring a session trigger operation for a session page;
displaying the session page in response to the session trigger operation, wherein an identifier of an existing member in the session page is displayed in the session page, and the identifier of the existing member is an object applied in the session page for identifying the corresponding existing member; and
displaying session information and the identifier of the member to which the session information belongs in the session page.

2. The session page display method according to claim 1, wherein the identifier of the existing member is displayed in a mobile manner from a first set position of the session page to a second set position of the session page.

3. The session page display method according to claim 1 or 2, wherein the displaying the session page in response to the session trigger operation comprises:
determining the identifier of the existing member in the session page in response to the session trigger operation;
displaying the session page; and
displaying the identifier of the existing member within the session page.

4. The session page display method according to claim 3, wherein the identifier of the existing member is an object that is randomly allocated and applied to the session page to identify the corresponding existing member, and a display duration of the session message in the session page is shorter than a set duration.

5. The session page display method according to any one of claims 1 to 4, wherein the acquiring a session trigger operation for a session page comprises:
displaying a chat page with a target user; and
acquiring the session trigger operation triggered in the chat page, wherein the session page triggered and displayed by the session trigger operation is a page for carrying out session with the target user.

6. The session page display method according to any one of claims 1 to 5, wherein the acquiring a session trigger operation for a session page comprises:
displaying a message page, wherein a session control corresponding to the session page is displayed in the message page; and
acquiring the session trigger operation triggered in a target hot area of the message page, wherein an area range of the target hot area is determined based on the display position of the session control in the message page.

7. The session page display method according to claim 6, wherein the session control comprises a prompt area in which content associated with the session page is displayed, and a size of the prompt area changes as a range in which the session trigger operation is operated changes.

8. The session page display method according to any one of claims 1 to 7, further comprising:
continuously reducing the display area of the session area in the session page to zero in a rotating manner in response to a session exit operation.

9. The session page display method according to any one of claims 1 to 8, further comprising:
displaying an identifier of a changed member in a set animation form in the session interface, wherein the changed member is a member with a changed session state, and the session state indicates whether the member is in the session to which the session interface belongs.

10. A session page display apparatus comprising:
an acquisition module configured to acquire a session trigger operation for a session page;
a first display module configured to display the session page in response to the session trigger operation, wherein an identifier of an existing member in the session page is displayed in the session page, and the identifier of the existing member is an object applied in the session page and used for identifying the corresponding existing member; and
a second display module configured to display session information and the identifier of the member to which the session information belongs in the session page.

11. An electronic device, comprising:
one or more processing devices;
a storage device to store one or more programs,
when executed by the one or more processing devices, the one or more programs cause the one or more processing devices to implement the session page display method according to any one of claims 1 to 9.

12. A non-transient storage medium containing computer-executable instructions which, when executed by a computer processor implements the session page display method according to any one of claims 1 to 9.

13. A computer program, comprising:
instructions which, when executed by a processor, cause the processor to implement the session page display method according to any one of claims 1 to 9.
